# DEMANDE DE BREVET EUROPEEN

(11) **EP 2 374 659 A2**
(43) Date de publication de la demande: **12.10.2011**
(21) Numéro de dépôt: 11161280.0
(22) Date de dépôt: 06.04.2011
(51) Int. Cl.: B60Q 1/076, F21V 14/08

(54) **Ensemble pour un dispositif d'éclairage et/ou de signalisation d'un véhicule automobile**

(30) Priorité: 12.04.2010 FR 1052737
(71) Demandeur: Valeo Vision, 93012 Bobigny (FR)
(72) Inventeur: Koulouh, Hassan, 93310, LE PRE SAINT GERVAIS (FR); Chiattelli, Claudio, 93150, LE BLANC MESNIL (FR)

(57) **Abrégé**

L'invention concerne un ensemble (1) pour un dispositif d'éclairage et/ou de signalisation d'un véhicule automobile, cet ensemble comportant :
- un support (2), notamment en matière plastique, comportant un logement (3),
- un moteur (5), notamment un moteur pas à pas, agencé pour pouvoir être monté à demeure, de manière directe, dans le logement du support.

## Description

L'invention concerne notamment un ensemble pour un dispositif d'éclairage et/ou de signalisation d'un véhicule automobile.

On connaît par le brevet EP 1 591 313 B1 un dispositif projecteur comportant un bloc actionneur multifonctions. Par actionneur, on désigne un élément électrotechnique, de type moteur, associé à une chaîne cinématique permettant le mouvement d'un élément cible. Le plus souvent, un actionneur comporte une carte de contrôle électronique destinée à gérer son fonctionnement. Le bloc actionneur présent dans le dispositif projecteur est multifonctions : il permet de réaliser une première fonction consistant dans le basculement d'un volet pivotant au sein du dispositif projecteur, et une deuxième fonction, dite fonction DBL.

Le domaine de l'invention est notamment celui des projecteurs de véhicule automobile. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des feux anti-brouillard.

Par ailleurs, on connaît un type de projecteur perfectionné, appelé projecteur bifonction, qui cumule les fonctions de feux de croisement et de feux longue portée : à cet effet, on peut par exemple disposer à l'intérieur du projecteur bifonction un cache rotatif pouvant passer sur commande d'une première position dans laquelle il occulte une partie du signal lumineux produit par la source lumineuse du projecteur, la portée du projecteur étant ainsi limitée à celle des feux de croisement pour ne pas éblouir les autres conducteurs, à une deuxième position dans laquelle il n'occulte pas le signal lumineux produit par la source lumineuse du projecteur, la portée du projecteur correspondant alors à celle des feux de route, comme décrit dans le brevet EP 1 197 387 . Cet exemple de réalisation est principalement mis en oeuvre dans les dispositifs projecteurs de type elliptique. Sur le même principe, il existe aussi des projecteurs multifonction, où un cache mobile peut adopter plus de deux positions pour occulter de plusieurs manières, de façon sélective, le faisceau lumineux émis par la source : on peut ainsi avoir des caches bi fonction code trafic à droite/code trafic à gauche, des caches tri-fonction code trafic à droite/code trafic à gauche/route etc ...

La présente invention concerne notamment des dispositifs multifonctions.

Pour permettre le basculement d'un faisceau d'un premier type à un faisceau d'un second type, notamment dans un dispositif multifonction, il est souvent souhaitable d'avoir un moteur pas à pas, qui présente un fonctionnement précis offrant une bonne résolution angulaire.

Cependant ce moteur doit être intégré dans une zone très chaude, du fait de la proximité avec la source de lumière, tout en occupant le plus petit espace pour des raisons d'encombrement.

De plus le montage du moteur dans le dispositif doit pouvoir se faire de manière relativement simple.

L'invention vise notamment à répondre aux multiples exigences ci-dessus.

L'invention a ainsi pour objet un ensemble pour un dispositif d'éclairage et/ou de signalisation d'un véhicule automobile, cet ensemble comportant :
- un support, notamment en matière plastique, comportant un logement,
- un moteur, notamment un moteur pas à pas, agencé pour pouvoir être monté à demeure, de manière directe, dans le logement du support.

De préférence, le moteur est monté à demeure dans le logement du support sans l'aide de vis ou de pièce supplémentaire, ce qui permet de simplifier les opérations d'assemblage et également de réduire l'encombrement par l'absence de pièces supplémentaires (par exemple vis).

Si on le souhaite, le moteur est monté dans le logement du support de manière irréversible, à savoir un mouvement du moteur dans le sens d'un désengagement de celui-ci hors du logement endommagerait le logement et/ou le moteur.

Dans un exemple de mise en oeuvre de l'invention, le moteur comprend une platine, notamment en métal, par exemple en acier, en inox ou en aluminium, agencée pour participer à la fixation du moteur dans le logement.

Avantageusement le moteur comporte un arbre rotatif d'axe longitudinal, et la platine s'étend sensiblement perpendiculairement à cet axe longitudinal du moteur.

Par exemple, la platine est disposée sur une face du moteur, du côté de l'arbre rotatif.

De préférence, le moteur comporte au moins une griffe agencée pour pouvoir mordre dans la matière du logement du support.

L'invention permet ainsi de ne pas être tributaire du fluage de la matière, notamment de la matière plastique du support. Le moteur est en quelque sorte monté rigidement dans le logement.

De plus, cette manière de faire permet un encombrement réduit.

Dans un exemple de mise en oeuvre de l'invention, la griffe est réalisée sur la platine du moteur, notamment sur une tranche de cette platine.

La platine peut comporter au moins deux griffes disposées sur deux côtés opposés de cette platine, sur la tranche de celle-ci.

La platine peut comporter, sur un même côté de sa tranche, au moins deux griffes voisines.

Dans un exemple de mise en oeuvre de l'invention, le moteur, et notamment la platine, comporte au moins deux griffes, l'une faisant saillie dans une première direction et l'autre griffe dans une autre direction, notamment une direction perpendiculaire à la première.

Si on le souhaite, le moteur comporte au moins un élément d'encliquetage agencé pour coopérer avec un élément d'encliquetage complémentaire sur le support.

Par exemple, ledit élément d'encliquetage sur le moteur correspond à un orifice formé sur la platine, et le support comporte au moins une patte d'encliquetage agencée pour s'engager par encliquetage dans ledit orifice de la platine.

Dans un exemple de mise en oeuvre de l'invention, la platine est agencée pour pouvoir être montée dans deux fentes latérales du logement du support.

Le cas échéant, la platine comporte au moins un élément de calage agencé pour permettre le calage de la platine dans le logement, notamment dans lesdites fentes.

L'élément de calage peut comporter un bossage formé sur une face de la platine.

Dans un exemple de mise en oeuvre de l'invention, la platine participe au montage d'un connecteur électrique sur le moteur.

Le moteur peut comporter une collerette de laquelle l'arbre rotatif du moteur fait saillie, et cette collerette est agencée pour s'engager dans un passage du support, notamment pour guider le moteur par rapport au support lors du montage.

Par exemple, le moteur comporte un arbre rotatif solidaire d'un pignon agencé pour coopérer avec une roue dentée pour l'actionnement de caches.

L'invention a également pour objet un moteur notamment pour un ensemble tel que défini ci-dessus, comportant une platine agencée pour participer à la fixation du moteur dans le logement.

L'invention concerne encore un dispositif d'éclairage et/ou de signalisation d'un véhicule automobile, notamment un projecteur de véhicule automobile, comportant un ensemble tel que défini ci-dessus.

Le dispositif peut comporter une pluralité de caches pour former des faisceaux lumineux de types différents, par exemple un faisceau code, un faisceau autoroute et un faisceau route, ces caches étant actionnables par le moteur pas à pas ou un moteur d'un autre type.

Avantageusement l'ensemble avec le moteur est disposé sensiblement entre un réflecteur et une lentille du dispositif.

L'invention a également pour objet un procédé pour l'assemblage d'un ensemble tel que défini ci-dessus, comportant l'étape suivante :
- fixer le moteur dans le logement du support, sans l'aide de vis ou de pièce supplémentaire.

L'invention pourra être mieux comprise à la lecture de la description détaillée qui va suivre, d'un exemple de mise en oeuvre non limitatif de l'invention, et à l'examen du dessin annexé, sur lequel :
- la figure 1 représente, schématiquement et partiellement, en vue de face, un ensemble selon un exemple de mise en oeuvre de l'invention,
- la figure 2 représente, schématiquement et partiellement, en vue de côté, l'ensemble de la figure 1, et

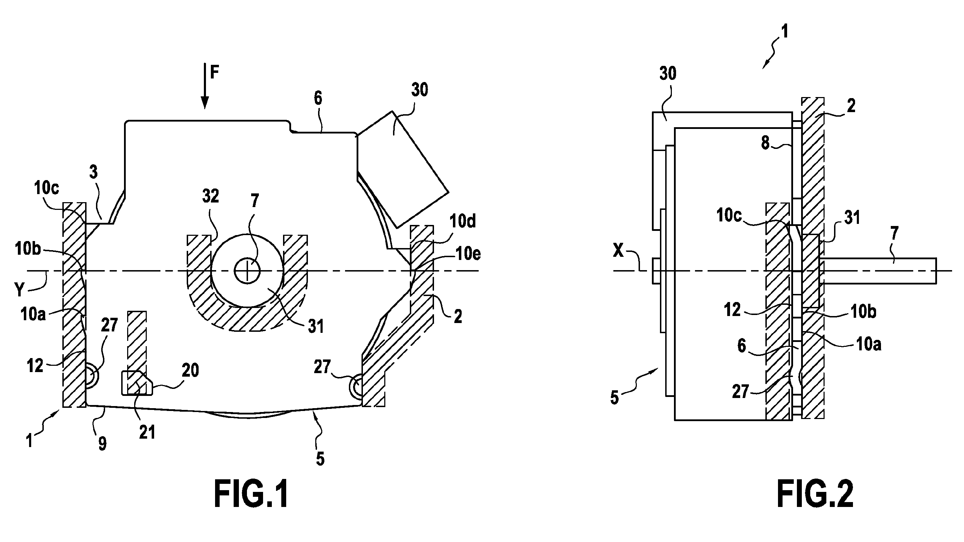

- la figure 2 représente, schématiquement et partiellement, en vue de dessus, l'ensemble de la figure 1.

On a représenté, sur les figures 1 à 3, un ensemble 1 pour un projecteur de véhicule automobile, cet ensemble comportant :
- un support 2 en matière plastique, par exemple en thermoplastique, comportant un logement 3, ce logement 3 comprenant un fond ajouré 9,
- un moteur pas à pas, référencé 5, agencé pour pouvoir être monté à demeure, de manière directe, dans le logement 3 du support 2.

Ce type de moteur pas à pas est capable de générer et reproduire, dans les conditions environnementales des projecteurs automobiles, des micro-déplacements compatibles avec des précisions de positionnement des coupures de faisceaux exigées, notamment de nature à éviter l'éblouissement d'autres usagers.

Les moteurs pas à pas qui sont le plus souvent de type « bipolaire », à savoir équipés de deux enroulements pilotés quadratiquement en courant, nécessitent une électronique de commande.

Le moteur 5 est monté à demeure dans le logement 3 du support 2, sans l'aide de vis ou de pièce supplémentaire.

Le moteur 5 est inséré dans ce logement 3 suivant une direction d'insertion F, vers le fond ajouré 9.

Dans l'exemple décrit, le moteur 5 est monté dans le logement 3 du support 2 de manière irréversible, à savoir un mouvement du moteur 5 dans le sens d'un désengagement de celui-ci hors du logement 3 endommagerait le logement et/ou le moteur 5.

Le moteur 5 comprend une platine 6, notamment en métal, agencée pour participer à la fixation du moteur 5 dans le logement 3.

Le moteur 5 comporte un arbre rotatif 7 d'axe longitudinal X, et la platine 6 s'étend sensiblement perpendiculairement à cet axe longitudinal X du moteur.

La platine 6 est disposée sur une face 8 du moteur, du côté de l'arbre rotatif 7.

Le moteur 5 comporte une pluralité de griffes 10a- 10e agencées pour pouvoir mordre dans la matière du logement 3 du support 2.

Les griffes 10a- 10e sont réalisées sur la platine 6 du moteur 5.

Certaines griffes 10a, 10b et 10e sont sur une tranche 12 de cette platine 6.

La platine 6 comporte des griffes 10a et 10b d'une part, et 10e d'autre part, disposées sur deux côtés opposés de cette platine 6, sur la tranche 12 de celle-ci.

Les griffes 10a et 10b sont disposées à proximité l'une de l'autre, étant par exemple adjacentes.

Les griffes 10a, 10b et 10e font saillie dans une première direction Y et les griffes 10c et 10d font saillie dans une autre direction, à savoir la direction X perpendiculaire à la première direction Y.

Les griffes sont, dans l'exemple décrit, réalisées d'un seul tenant avec la platine 6.

Bien entendu, le nombre de griffes et leur disposition peuvent être différents de ce qui vient d'être décrit.

La platine 6 comporte un élément d'encliquetage 20 agencé pour coopérer avec un élément d'encliquetage complémentaire 21 sur le support.

Par exemple, ledit élément d'encliquetage sur la platine correspond à un orifice 20 formé sur la platine 6, et le support comporte une patte d'encliquetage 21 agencée pour s'engager par encliquetage dans ledit orifice 20 de la platine.

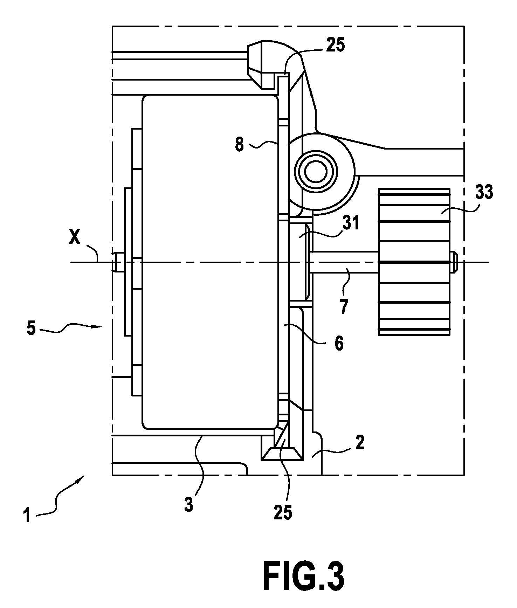

La platine 6 est agencée pour pouvoir être montée dans deux fentes latérales 25 du logement 3 du support 2, comme visible sur la figure 3 notamment.

La platine 6 comporte en outre deux éléments de calage 27 (faisant saillie suivant la direction X), sur deux côtés de la platine 6, à proximité du fond 9, agencés pour permettre le calage, suivant l'axe X, de la platine 6 dans les fentes 25.

L'élément de calage peut comporter un bossage 27 formé sur une face de la platine 6.

La platine 6 participe au montage d'un connecteur électrique 30 sur le moteur 5. Ce connecteur 30 permet notamment l'alimentation électrique du moteur 5.

Le moteur 5 comporte une collerette 31 de laquelle l'arbre rotatif 7 du moteur fait saillie, et cette collerette 31 est agencée pour s'engager dans un passage 32 du support, pour guider le moteur 5 par rapport au support lors du montage.

L'arbre rotatif 7 est solidaire d'un pignon 33 agencé pour coopérer avec une roue dentée, non représentée, pour l'actionnement de caches.

## Revendications

1. Ensemble (1) pour un dispositif d'éclairage et/ou de signalisation d'un véhicule automobile, cet ensemble comportant :
- un support (2), notamment en matière plastique, comportant un logement (3),
- un moteur (5), notamment un moteur pas à pas, agencé pour pouvoir être monté à demeure, de manière directe, dans le logement du support.

2. Ensemble selon la revendication précédente, **caractérisé par le fait que** le moteur (5) est monté à demeure dans le logement du support sans l'aide de vis ou de pièce supplémentaire.

3. Ensemble selon l'une des revendications précédentes, **caractérisé par le fait que** le moteur (5) est monté dans le logement du support de manière irréversible, à savoir un mouvement du moteur dans le sens d'un désengagement de celui-ci hors du logement endommage le logement et/ou le moteur.

4. Ensemble selon l'une des revendications précédentes, **caractérisé par le fait que** le moteur comprend une platine (6), notamment en métal, agencée pour participer à la fixation du moteur dans le logement.

5. Ensemble selon la revendication précédente, le moteur comportant un arbre rotatif d'axe longitudinal, **caractérisé par le fait que** la platine (6) s'étend sensiblement perpendiculairement à cet axe longitudinal (X) du moteur.

6. Ensemble selon l'une des revendications précédentes, **caractérisé par le fait que** le moteur comporte au moins une griffe (10a- 10e) agencée pour pouvoir mordre dans la matière du logement du support.

7. Ensemble selon la revendication précédente, **caractérisé par le fait que** la griffe est réalisée sur la platine du moteur, notamment sur une tranche (12) de cette platine.

8. Ensemble selon la revendication précédente, **caractérisé par le fait que** la platine (6) comporte au moins deux griffes disposées sur deux côtés opposés de cette platine, sur la tranche de celle-ci.

9. Ensemble selon l'une des revendications précédentes, **caractérisé par le fait que** le moteur comporte au moins un élément d'encliquetage (20) agencé pour coopérer avec un élément d'encliquetage (21) complémentaire sur le support.

10. Ensemble selon la revendication précédente, **caractérisé par le fait que** ledit élément d'encliquetage sur le moteur correspond à un orifice (20) formé sur la platine, et le support comporte au moins une patte d'encliquetage (21) agencée pour s'engager par encliquetage dans ledit orifice de la platine.

11. Ensemble selon l'une des revendications 4 à 10, **caractérisé par le fait que** la platine (6) est agencée pour pouvoir être montée dans deux fentes latérales du logement du support.

12. Ensemble selon l'une des revendications 4 à 11, **caractérisé par le fait que** la platine comporte au moins un élément de calage (27) agencé pour permettre le calage de la platine dans le logement, notamment dans lesdites fentes.

13. Moteur notamment pour un ensemble selon l'une des revendications précédentes, comportant une platine (6) agencée pour participer à la fixation du moteur dans le logement.

14. Dispositif d'éclairage et/ou de signalisation d'un véhicule automobile, notamment un projecteur de véhicule automobile, comportant un ensemble (1) selon l'une des revendications 1 à 12.

15. Procédé pour l'assemblage d'un ensemble selon l'une des revendications 1 à 12, comportant l'étape suivante :
- fixer le moteur dans le logement du support, sans l'aide de vis ou de pièce supplémentaire.
